# EUROPÄISCHE PATENTANMELDUNG

(11) **EP 3 444 488 A1**
(43) Veröffentlichungstag der Anmeldung: **20.02.2019**
(21) Anmeldenummer: 18167921.8
(22) Anmeldetag: 18.04.2018
(51) Int. Cl.: F16B 39/34, A01B 79/00, A01D 34/00, A01D 41/127

(54) **LANDWIRTSCHAFTLICHES ARBEITSFAHRZEUG**

(30) Priorität: 17.08.2017 DE 102017118762
(71) Anmelder: CLAAS Industrietechnik GmbH, 33106 Paderborn (DE)
(72) Erfinder: Ahrens, Uwe, 33165 Lichtenau (DE)
(74) Vertreter: CLAAS Gruppe

(57) **Zusammenfassung**

Die vorliegende Erfindung betrifft ein landwirtschaftliches Arbeitsfahrzeug (1), mit zumindest einem sensorisch überwachten Arbeitsaggregat (2, 3, 5, 6, 8, 10, 11, 13, 24, 36, 40), wofür zumindest ein Sensor (14, 16, 18, 20, 21, 22, 23, 25, 26, 37, 38, 46, 47, 48) dem zu überwachenden Arbeitsaggregat (2, 3, 5, 6, 8, 10, 11, 13, 24, 36, 40) zugeordnet ist, wobei der zumindest eine Sensor (14, 16, 18, 20, 21, 22, 23, 25, 26, 37, 38, 46, 47, 48) als ein Einschraubsensor (50) ausgebildet ist, welcher einen Gewindeabschnitt (52) aufweist, der durch wenigstens eine im Wesentlichen senkrecht zur Gewindesteigung verlaufende Ausnehmung (56) zumindest abschnittsweise unterbrochen ist, in die ein elastisch verformbares fadenförmiges Element (57) eingelegt ist.

## Beschreibung

Die vorliegende Erfindung betrifft ein landwirtschaftliches Arbeitsfahrzeug gemäß dem Oberbegriff des Anspruches 1.

Landwirtschaftliche Arbeitsfahrzeuge wie selbstfahrende Erntemaschinen oder Traktoren weisen zumindest ein steuer- oder regelbares Arbeitsaggregat auf, welches in Abhängigkeit von wenigstens einem Betriebsparameter angesteuert wird, um ein optimales Arbeitsergebnis zu liefern. Hierzu wird das zumindest eine Arbeitsaggregat sensorisch überwacht, um auf sich ändernde Betriebsparameter adäquat reagieren zu können. Zu diesem Zweck ist zumindest ein Sensor dem zu überwachenden Arbeitsaggregat zugeordnet. Die von dem zumindest einen Sensor erzeugten Signale werden an eine Steuerungseinrichtung des Arbeitsfahrzeugs übertragen. Die Steuerungseinrichtung wertet die Signale aus, um auf Basis der Auswertung das zumindest eine Arbeitsaggregat zu steuern oder zu regeln.

Ein landwirtschaftliches Arbeitsfahrzeug der eingangs genannten Art ist aus der DE 101 47 733 A1 bekannt. Das landwirtschaftliche Arbeitsfahrzeug ist als ein Mähdrescher ausgeführt, welcher mehrere sensorisch überwachte Arbeitsaggregate aufweist. Hierzu sind den zu überwachenden Arbeitsaggregaten jeweils ein oder mehrere Sensoren zugeordnet. Zu den sensorisch überwachten Arbeitsaggregaten eines Mähdreschers zählen unter anderem ein Anbau- oder Vorsatzgerät, eine Drescheinrichtung, eine Abscheideeinrichtung, eine Reinigungsvorrichtung sowie eine Häcksel- und Verteilvorrichtung. Darüber hinaus sind Sensoren vorgesehen, welche der Überwachung eines dem Betreiben des Mähdreschers dienenden Verbrennungsmotors, eines Antriebsstranges zum Antreiben der einer Be- und Verarbeitung von Erntegut dienenden Arbeitsaggregate sowie zumindest einer Arbeitshydraulik dienen, welche ebenfalls als Arbeitsaggregate des Mähdreschers zu verstehen sind, und die im Zusammenwirken mit den anderen Arbeitsaggregaten Einfluss auf das Arbeitsergebnis haben.

Zumindest einige der an einem landwirtschaftlichen Arbeitsfahrzeug angeordneten Sensoren sind lösbar befestigt, um diese im Bedarfsfall an dem jeweiligen Arbeitsaggregat durchzuführenden Wartungs- oder Reparaturarbeiten demontieren oder austauschen zu können. Hierzu können die Sensoren als Einschraubsensoren ausgebildet sein. Aus der DE 197 14 203 C2 ist ein als Einschraubsensor ausgeführter Gassensor bekannt. Die DE 43 18 107 A1 beschreibt einen Messfühler zur Detektion von in einer Abgasleitung eines Verbrennungsmotors strömenden Gasen. Der Messfühler weist ein Gehäuse mit einem Bund auf, das von einem einen Innengewindeabschnitt aufweisenden Flansch an der Abgasleitung aufgenommen wird. Eine am Bund des Gehäuses angreifende Überwurfmutter ist in den Innengewindeabschnitt des Flansches einschraubbar.

Die Verwendung eines Einschraubsensors an einem landwirtschaftlichen Arbeitsfahrzeug ist aufgrund der starken Vibrationen, die von den Arbeitsaggregaten erzeugt und durch die Karosserie bzw. sonstige Bauteile des Arbeitsfahrzeugs übertragen werden, insofern problematisch, als dass das Gewinde des Einschraubsensors und dessen Gegenstück alleine keine ausreichende axiale Sicherung gegen ein Lösen der Schraubverbindung bietet. Es bedarf zusätzlicher Befestigungsmittel, um den lösbar angeordneten Einschraubsensor in seiner Position sicher zu fixieren. Alternativ wird der Einschraubsensor bei dessen Montage eingeklebt, wodurch dieser gegen ein Lösen aufgrund der Vibrationen gesichert ist. Jedoch ist ein späterer zerstörungsfreier Ausbau des eingeklebten Einschraubsensors in der Regel nicht mehr möglich. Zudem ist das Einkleben von Einschraubsensoren in nicht fabrikneue Gegenstücke, z.B. im Reparaturfall, aufgrund der üblicherweise auftretenden Verschmutzung der Oberfläche in der Regel nicht prozesssicher durchführbar.

Somit liegt der Erfindung die Aufgabe zugrunde, ein landwirtschaftliches Arbeitsfahrzeug der eingangs genannten Art weiterzubilden, welches sich durch eine einfache und effiziente Möglichkeit zur lösbaren Fixierung eines Einschraubsensors auszeichnet.

Diese Aufgabe wird durch die Merkmale des Anspruches 1 gelöst.

Vorteilhafte Weiterbildungen sind Gegenstand der Unteransprüche.

Gemäß dem Anspruch 1 ist ein landwirtschaftliches Arbeitsfahrzeug, insbesondere eine selbstfahrende Erntemaschine, ein Rad- oder Teleskoplader oder ein Traktor, mit zumindest einem sensorisch überwachten Arbeitsaggregat, wofür zumindest ein Sensor dem zu überwachenden Arbeitsaggregat zugeordnet ist, vorgesehen. Unter dem Begriff Arbeitsaggregat werden im Sinne der Erfindung sämtliche Bauteile und/oder Steuerelemente eines landwirtschaftlichen Arbeitsfahrzeuges verstanden, die eine bestimmte Funktion zur Erreichung eines Arbeitsergebnisses des Arbeitsfahrzeugs erfüllen. Um den zumindest einen als Einschraubsensor ausgebildeten Sensor trotz der starken Vibrationen, die im laufenden Betrieb des landwirtschaftlichen Arbeitsfahrzeuges auftreten, auf einfache Weise sicher lösbar zu fixieren, wird vorgeschlagen, dass der zumindest eine als Einschraubsensor ausgebildete Sensor, einen Gewindeabschnitt aufweist, der durch wenigstens eine im Wesentlichen senkrecht zur Gewindesteigung verlaufende Ausnehmung zumindest abschnittsweise unterbrochen ist, in die ein elastisch verformbares fadenförmiges Element eingelegt ist, welches teilweise über das Gewinde hinausragt. Durch das fadenförmige Element wird ein ungewolltes Losdrehen des Einschraubsensors in Folge der im Betrieb auftretenden Vibrationen des Arbeitsfahrzeugs verhindert. Erreicht wird dies durch die Selbstsicherung des Gewindeabschnitts, die durch die Klemmwirkung des teilweise in radialer Richtung hervorstehenden fadenförmigen Elementes bewirkt wird. Beim Einschrauben ergibt sich die klemmende Wirkung aufgrund der auftretenden Flächenpressung. Hierdurch wird eine zuverlässige Sicherung gegen unbeabsichtigtes Lockern oder Losdrehen erreicht. Zum anderen ergibt sich eine gute Eignung für einen schnellen, einfachen und zuverlässigen Aus und Einbau bei Service- oder Feldaktionen.

Gegenüber dem aus der DE 43 18 107 A1 bekannten Messfühler sind keine zusätzlichen Bauteile erforderlich. Ebenso kann auf das Einkleben des Einschraubsensors verzichtet werden. Hieraus ergibt sich der Vorteil, dass eine Wiederverwendung des Einschraubsensors zulässig ist.

Bevorzugt kann das fadenförmige Element aus einem Kunststoff oder einem Kompositwerkstoff bestehen. Insbesondere kann das fadenförmige Element aus einem Thermoplast hergestellt sein. Eine besonders hohe Belastbarkeit kann durch das Einbetten von Kohle- oder Glasfasern in den Thermoplast erreicht werden.

Für eine verliersichere Anordnung des fadenförmigen Elementes kann die Ausnehmung zumindest eine Hinterschneidung aufweisen. So kann die Ausnehmung beispielsweise einen im Wesentlichen trapezförmigen oder halbkreisförmigen Querschnitt aufweisen.

Alternativ oder zusätzlich kann das fadenförmige Element in die Ausnehmung eingeklebt sein. Dadurch kann der Aufwand bei der Herstellung des Gewindeabschnitts reduziert werden.

Insbesondere kann der Einschraubsensor als aktiver oder passiver Sensor ausgebildet sein. Dadurch ist ein breites Anwendungsspektrum abdeckbar.

In bevorzugter Weiterbildung kann der Einschraubsensor als berührungslos arbeitender Sensor ausgebildet sein. Hierzu kann der Einschraubsensor als induktiver Sensor oder als Magnetfeldsensor ausgebildet sein. Letztere können beispielsweise zur Bestimmung von Kräften und Drehmomenten einer Achse des landschaftlichen Arbeitsfahrzeuges Verwendung finden.

Gemäß einer vorteilhaften Ausführungsform kann der Einschraubsensor als Drucksensor ausgebildet sein. Die Verwendung des als selbstsichernden Einschraubsensors ausgeführten Drucksensors in einem Hydrauliksystem respektive einer Arbeitshydraulik eines landwirtschaftlichen Arbeitsfahrzeuges ist aufgrund der hier typischerweise vorliegenden Verunreinigung der Oberflächen mit Hydrauliköl besonders vorteilhaft. Bei einem Austausch lässt sich durch den Einbau eines selbstsichernden Einschraubsensor die Problematik umgehen, dass ein Verkleben eines konventionellen Drucksensors aufgrund der mit Hydrauliköl kontaminierten Oberflächen nicht Prozesssache durchführbar ist. Ebenso entfällt die Verwendung eines zusätzlichen mechanisch sperrenden Bauteils zur axialen Sicherung, welches zu einer veränderten Bauhöhe des Drucksensors führt, was die Messgenauigkeit aufgrund einer veränderten Messanordnung beeinflusst.

Weiterhin kann der Einschraubsensor als Temperatursensor, Feuchtesensor, Beschleunigungssensor, Drehzahlsensor oder Winkelsensor ausgebildet sein.

Des Weiteren kann der Einschraubsensor als optischer Sensor ausgebildet sein. Beispielsweise kann der Einschraubsensor als Lichtschranke ausgebildet sein welche zur Durchsatzmessung in einer Erntegutfördervorrichtung eines Mähdreschers zum Einsatz kommt.

Insbesondere kann der Einschraubsensor einem aktiv bewegten Bauteil zugeordnet sein. So werden beispielsweise Beschleunigungssensoren, Drehzahlsensoren oder Winkelsensoren aktiv bewegten Bauteilen zugeordnet, um deren Betrieb zu überwachen und um deren Betriebsparameter optimal einstellen zu können. Die im laufenden Betrieb des aktiv bewegten Bauteils auftretenden Schwingungen führen durch die erfindungsgemäße Ausgestaltung des Einschraubsensors nicht dazu, dass sich dieser unbeabsichtigt lockern oder lösen kann.

Darüber hinaus kann der Einschraubsensor einem passiv schwingenden Bauteil zugeordnet sein. Die Zuordnung des Einschraubsensors zu einem passiv schwingenden Bauteil des landschaftlichen Arbeitsfahrzeugs ist der überwiegend auftretende Anwendungsfall. Hierbei übertragen sich Schwingungen von den aktiv bewegten Bauteilen eines oder mehrerer Arbeitsaggregate auf unmittelbar benachbarte als auch räumlich weiter entfernte angeordnete feststehende Bauteile des oder der Arbeitsaggregate. Durch die Verwendung von selbstsichernden Einschraubsensoren wird zuverlässig verhindert, dass es zu einem Lösen oder Lockern des jeweiligen Einschraubsensors kommt.

Insbesondere kann der Einschraubsensor einer Arbeitshydraulik des Arbeitsfahrzeugs oder eines Arbeitsaggregates zugeordnet sein. Da die Kontamination der Verbindungsstelle zur Anordnung des Einschrauben Sensors mit Hydrauliköl insbesondere dann gegeben ist, wenn die Arbeitshydraulik bereits verwendet wurde, zum Beispiel durch Abnahmetests in der Produktion oder durch Kundengebrauch. Bei einem eventuell erforderlichen Sensorwechsel als Service- oder Reparaturmaßnahme ist ein Austausch des Einschraubsensors ohne eine weitere Maßnahme möglich.

Die vorliegende Erfindung wird nachstehend anhand eines in den Zeichnungen dargestellten Ausführungsbeispieles näher erläutert.

Es zeigen:
- Fig. 1: ein landwirtschaftliches Arbeitsfahrzeug in Form einer schematisierten Seitenansicht eines Mähdrescher;
- Fig. 2: eine perspektivische Teilansicht einer Hinterachse eines Traktors mit einer modularen Sensoranordnung;
- Fig. 3: eine Seitenansicht eines als Drucksensors ausgebildeten Einschraubsensors.

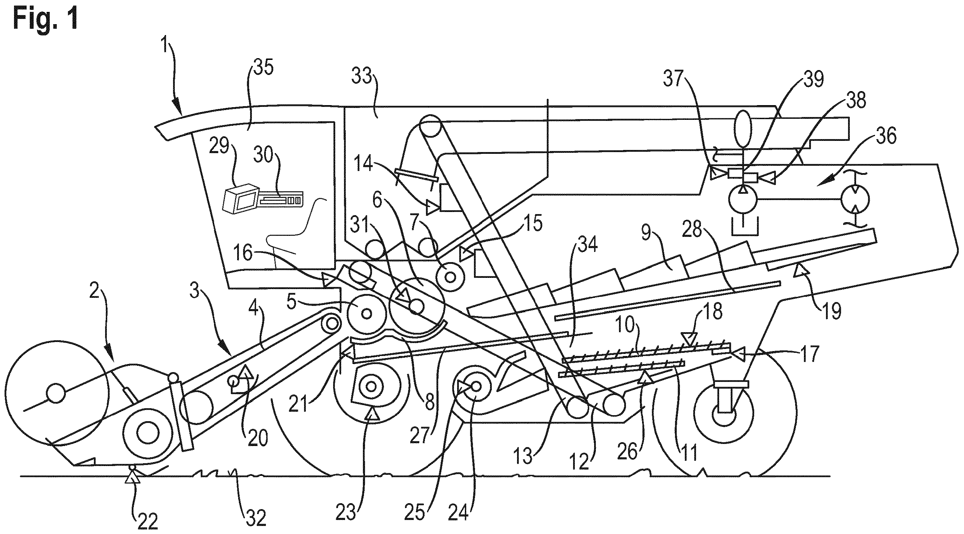

In der Fig. 1 ist eine schematisierte Seitenansicht eines als Mähdreschers 1 ausgeführten landwirtschaftlichen Arbeitsfahrzeugs gezeigt. Aufgabe eines Mähdreschers 1 ist es, auf Halmen wachsendes Erntegut von einer Bearbeitungsfläche 32 aufzunehmen und von den Halmen und weiteren Beimengungen zu trennen. Zur Aufnahme des Erntegutes ist beispielsweise ein als Getreideschneidwerk 2 ausgeführtes Vorsatzgerät an dem Mähdrescher 1 angeordnet. Das Getreideschneidwerk 2 schneidet die Ernteguthalme ab und führt es anschließend auf die Breite eines dem Einzug dienenden Schrägförderers 3 zusammen. In dem Schrägförderer 3 befinden sich umlaufende Einzugsketten 4 mit Querstegen, die das Erntegut den nachgeordneten Dreschaggregaten 5, 6 zuführen. Das Erntegut wird von den Dreschaggregaten 5, 6 aus den Ähren gelöst und vom Stroh getrennt und gelangt dann durch den für das Erntegut durchlässigen Dreschkorb 8 auf den Vorbereitungsboden 27. Das von der Dreschtrommel 6 abgegebene Stroh, wird durch die Wendetrommel 7 abgebremst und auf einen Hordenschüttler 9 umgelenkt. Die Schwingbewegung des Hordenschüttlers 9 sowie dessen stufenförmigen Ausbildung bewirken eine Förderung des Strohs zum hinteren Ende des Mähdreschers 1 hin sowie eine Abscheidung des noch im Stroh befindlichen Erntegutes durch Öffnungen im Boden des Hordenschüttlers 9. Diese Restmenge wird von dem Rücklaufboden 28 und einer Schwingbewegung desselben ebenfalls auf den Vorbereitungsboden 27 übergeben. Das auf dem Vorbereitungsboden 27 befindliche Erntegut mit den weiteren Beimengungen, wie Strohstücke, Spreu und Ährenteile, wird durch eine Schwingbewegung desselben und dessen stufenförmigen Ausbildung separiert und den nachfolgenden Arbeitsaggregaten 10, 11, 24 einer Reinigungseinrichtung zugeführt. Die Übergabe erfolgt über eine von einem Reinigungsgebläse 24 belüftete Fallstufe 34 auf ein Obersieb 10. Dieses sowie ein darunter befindliches Untersieb 11 sind in der Regel Lamellensiebe mit jeweils separat einstellbaren Öffnungsweiten. Das Ober- sowie das Untersieb 10, 11 werden von einem von dem Reinigungsgebläse 24 erzeugten Luftstrom durchsetzt. Die Schwingbewegung der Siebe 10, 11 sowie der Luftstrom bewirken eine Förderung des Erntegutes sowie deren Beimengungen zum hinteren Ende des Mähdreschers 1 hin. Durch die Fallstufe 34 werden große und leichte Beimengungen von dem Luftstrom, bevor sie das Obersieb 10 erreichen, erfasst und aus dem Mähdrescher 1 abgeschieden. Kleinere und schwerere Erntegutbestandteile gelangen von dem Vorbereitungsboden 27 über die Fallstufe 34 auf das Obersieb 10. Je nach Einstellung der Obersiebweite, fallen die einzelnen Erntegutkörner und weitere Bestandteile des Erntegutes durch dieses hindurch und gelangen so auf das Untersieb 11. Stroh und nicht ausgedroschene Ähren werden über den vorderen Siebbereich hinweg bewegt und fallen im hinteren Bereich des Obersiebes 10 durch das Obersieb 10 direkt in die sogenannte Überkehr. Das Untersieb 11 besitzt in der Regel eine feinere Sieblamellenstuktur als das Obersieb 10 und wird normalerweise mit einer geringeren Öffnungsweite als das Obersieb 10 eingestellt. Größere und leichte Erntegutbestandteile, wie Erntegutkörner mit Spelz, Ährenteile oder Halmteile werden, sofern sie durch das Obersieb 10 auf das Untersieb 11 gelangt sind, durch die Schwingbewegung und den Luftstrom in die Überkehr übergeben. Das gereinigte Erntegut selbst fällt direkt durch das Untersieb 11 hindurch und wird mittels einer Zuführschnecke und einem Kornelevator 13 in einen Korntank 33 gefördert. Das in die Überkehr gelangte Erntegut wird mittels einer Zuführschnecke und dem Überkehrelevator 12 oberhalb des als Vorbeschleunigertrommel ausgeführten Dreschaggregates 5 erneut dem Dreschprozess zugeführt.

Der Mähdrescher 1 ist mit einer Fahrerkabine 35 ausgestattet, in welcher eine Steuer- und Monitoreinrichtung 29 sowie eine Bedien- und Anzeigeeinrichtung 30 angeordnet sind. Die Steuer- und Monitoreinrichtung 29 sowie die Anzeige- und Bedieneinrichtung 30 stehen mit in dem Mähdrescher 1 an verschiedenen Orten angeordneten einzelnen Sensoren und Aktoren in Verbindung. Der Bediener des Mähdreschers 1 erhält hierdurch die Möglichkeit, die Funktionsweise der einzelnen Arbeitsaggregate des Mähdreschers 1 einzustellen und zu überwachen. In der Fig. 1 werden durch Pfeilspitzen die einzelnen Stellen in dem Mähdrescher 1 angedeutet, an welchen jeweils ein Sensor angeordnet ist oder mehrere Sensoren angeordnet sind, die zur Ermittlung von Prozess- und Einstellparameter dienen. Die jeweiligen Aktoren zur Einstellung der Arbeitsaggregate des Mähdreschers 1 sind dem Fachmann ausreichend bekannt, so dass auf deren Darstellung verzichtet werden kann.

An der Antriebsachse des Mähdreschers 1 ist eine Fahrgeschwindigkeitsmesseinrichtung 23 angeordnet, die die jeweilige Fahrgeschwindigkeit erfasst.

Dem Schneidwerk 2 ist eine Schnitthöhen-Messeinrichtung 22 zugeordnet. Die se dient der Ermittlung des tatsächlichen Abstandes zwischen dem Schneidwerk 2 und der Bearbeitungsfläche 32. Zur Erfassung einer Erntegutmenge ist in dem Schrägförderer 3 eine Mengenmesseinrichtung 20 angebracht. Diese ermittelt die von der Erntemenge abhängige Auslenkung der Einzugskette 4.

Eine weitere Sensorik 21 ist an dem Dreschkorb 8 angeordnet. Diese Dreschkorbweiten-Messeinrichtung 21 ist einfach oder mehrfach ausgebildet und ermittelt den Abstand zwischen der Vorbeschleunigertrommel 5 und dem Dreschkorb 8 und/oder der Dreschtrommel 5 und dem Dreschkorb 8 an einer oder mehreren Stellen. Die Vorbeschleunigertrommel 5, die Dreschtrommel 6 und die Wendetrommel 7 werden in der Regel von einem gemeinsamen Antrieb angetrieben, wobei die Drehzahlen der Trommeln 5, 6, 7 variiert werden können. Diesen Trommeln 5, 6, 7 ist eine Drehzahlsensoren umfassende Dreschtrommeldrehzahl-Messeinrichtung 31 zur Erfassung zumindest einer der Trommeldrehzahlen zugeordnet.

Zur Erzeugung unterschiedlicher Luftströme durch die Reinigungseinrichtung ist der Antrieb des Reinigungsgebläses 24 drehzahlvariabel ausgeführt. Die tatsächliche Drehzahl des Reinigungsgebläses 24 wird mittels eines Drehzahlsensors 25 erfasst. Der Reinigungseinrichtung können weitere Sensoren wie eine Obersieb-Weitenmesseinrichtung 18 und eine Untersieb-Weitenmesseinrichtung 26 zugeordnet sein. Diese Messeinrichtungen 18, 26 können separat ausgeführt und jeweils an dem Ober- und Untersieb 10, 11 angeordnet sein. Am hinteren Ende des Obersiebes 10 ist eine Obersieb- Verlustmesseinrichtung 17 angeordnet. Hiermit lassen sich anteilig die Erntegutkörner erfassen, die über die Reinigungseinrichtung hinweg den Mähdrescher 1 verlassen und als Verluste verloren gehen. Derartige Sensoren sind dem Fachmann bekannt und erstrecken sich teilweise oder komplett über die Arbeitsbreite der Reinigungseinrichtung. Sie sind normalerweise als Prallplatte oder -rohr ausgebildet und werten die Schwingungen aus, die durch Aufprall von Erntegutkörner auf die Platte oder Röhre erzeugt werden. So wird diese Sensortechnik auch in den Schüttlern 9 zur Erfassung der Abscheidung eingesetzt. Um eine Aussage über die noch im Stroh befindlichen Resterntegutkörner zu erhalten, ist zumindest am hinteren Ende eines Schüttlers 9 ein Schüttler-Verlustsensor 19 befestigt.

Zur Beurteilung der in der Überkehr befindlichen Erntegutbestandteile ist eine Überkehrmesseinrichtung 16 am oberen Ende des Überkehrelevators 12 angeordnet. Hiermit lassen sich das Überkehrvolumen, der Korn- und der Bruchkornanteil bestimmen. Bekannt sind hierfür optische Lichtschranken, optische Sensoren oder Durchleuchtungssensoren (NIR-Sensoren). Der Kornelevator 13 ist mit weiteren Sensoren 14, 15 ausgestattet, welche die Ermittlung der Fördermenge durch ein Ertragsmesssystem 14 sowie die Ermittlung des spezifischen Gewichtes des Erntegutes durch eine Kalibrierwaage 15 erlauben.

Des Weiteren umfasst der Mähdrescher 1 zumindest eine Arbeitshydraulik 36, der in Fig. 1 schematisch angedeutet ist, welcher unter anderem dem Betreiben eines hydrostatischen Fahrantriebes des Mähdreschers 1 dient. Darüber hinaus versorgt die Arbeitshydraulik 36 einzelne Arbeitsaggregate oder deren Komponenten mit einem Hydraulikdruck. So erfolgt beispielsweise der Antrieb der Haspel des Getreideschneidwerks 2 hydrostatisch. Die Überwachung der Arbeitshydraulik 36 erfolgt durch zumindest einen Drucksensor 37 sowie zumindest einen Temperatursensor 38, welche in einer Hydraulikleitung 39 der Arbeitshydraulik 36 angeordnet sind. Der Drucksensor 37 als auch der Temperatursensor 38 sind als Einschraubsensoren ausgeführt.

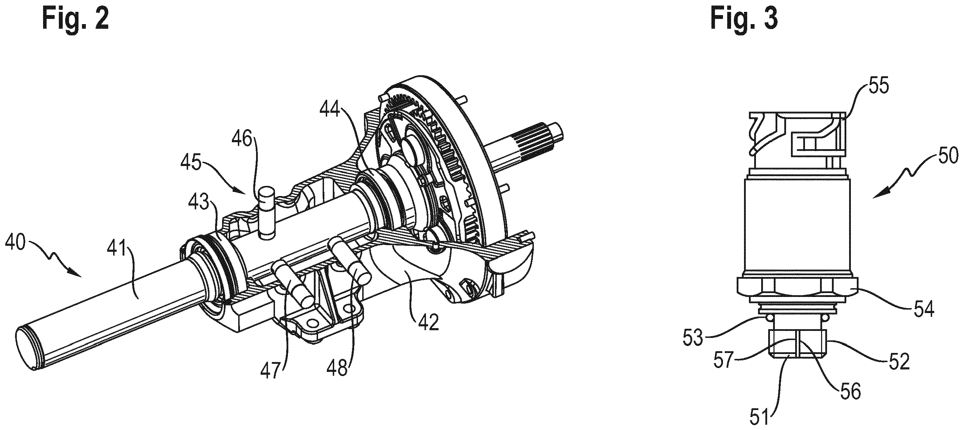

Fig. 2 zeigt eine perspektivische Teilansicht einer Hinterachse 40 eines als Traktor ausgeführten landwirtschaftlichen Arbeitsfahrzeugs in einer Teilschnittdarstellung. Die Hinterachse 40 ist in ihren wesentlichen Merkmalen symmetrisch aufgebaut. Insbesondere weist die Hinterachse 40 von einem mittig angeordneten Differential nach links und nach rechts zu den jeweiligen Hinterrädern verlaufende Hinterachswellen 41 auf. Jede der Hinterachswellen 41 ist in einem Achstrichtergehäuse 42 mittels Wälzlagern drehbar gelagert. An einem äußeren Bereich des jeweiligen Achstrichtergehäuses 42 befindet sich ein äußeres Radlager 43. Innerhalb des Achstrichtergehäuses 42 ist, beabstandet zu dem äußeren Radlager 43, ein inneres Radlager 44 angeordnet.

Die Hinterachse 40 weist eine modulare Sensoranordnung 45 auf, mit welcher sich eine mechanische Belastung der Hinterachswelle 41 erfassen lässt. Insbesondere lassen sich mit der Sensoranordnung 45 die auf die Hinterachswelle 41 in vertikaler und horizontaler Richtung wirkenden Radkräfte, Trieb- und Bremskraft, erfassen.

Die Sensoranordnung 45 umfasst zwei voneinander unabhängige Sensoren 46, 47, welche als berührungslos arbeitende Abstandssensoren ausgebildet sind. Die Sensoren 46, 47 sind in dem jeweiligen Achstrichtergehäuse 42 der Hinterachse 5 angeordnet. Hierzu sind die Sensoren 46, 47 als Einschraubsensoren ausgebildet. Die Anordnung der Sensoren 46 und 47 erfolgt dabei vorzugsweise im Bereich größter Relativverformung der Hinterachswelle 44.

Bei den als berührungslos arbeitenden Sensor 46, 47 kann es sich um induktive Abstandssensoren handeln, die auf dem Wirbelstrommessprinzip basieren. Der jeweilige Sensor 46, 47 ist dazu eingerichtet, eine Abstandsänderung aufgrund einer Relativverformung zwischen der Hinterachswelle 41 und dem Achstrichtergehäuse 42 zu erfassen. Hierdurch lassen sich die in die Hinterachswelle 41 eingeleiteten Radkräfte, bestimmen.

In Ergänzung ist ein magnetostriktiver Sensor 48 vorgesehen, welcher benachbart zu den induktiven Abstandssensoren 46 und 47 angeordnet ist. Der magnetostriktive Sensor 48 dient dabei der Drehmomentbestimmung. Die Sensoren 46, 47 sowie der magnetostriktive Sensor 48 sind als Einschraubsensoren ausgeführt, die in entsprechende Gewindeabschnitte im Achstrichtergehäuse 42 eingeschraubt werden.

Den vorstehend beschriebenen Sensoren des Mähdreschers 1 als auch der Hinterachse 40 des Traktors ist gemeinsam, dass sie in der Regel an einem aktiv bewegten Bauteil eines Arbeitsaggregates angeordnet sind, wodurch Schwingungen unmittelbar auf die Sensoren einwirken, oder einem passiv schwingenden Bauteil zugeordnet sind, welches durch die Übertragung von Vibrationen durch die Karosserie oder sonstige Bauteile des landwirtschaftlichen Arbeitsfahrzeugs zum Schwingen angeregt.

In Fig. 3 ist ein als Drucksensor 37 ausgebildeter Einschraubsensor 50 dargestellt. Der Einschraubsensor 50 weist eine Düse 51 auf, die im Inneren eines Außengewindeabschnittes 52 verläuft. An den Außengewindeabschnitt 52 schließt sich ein Werkzeugbetätigungsabschnitt 54 an. Unterhalb des Werkzeugbetätigungsabschnittes 54 ist ein insbesondere als O-Ring ausgeführtes Dichtelement 53 angeordnet. Auf der dem Außengewindeabschnitt 62 abgewandten Seite des Einschraubsensor 50 befindet sich ein Gerätesteckeranschluss 55, an den eine Zuleitung zur Signalübertragung anschließbar ist.

Der Außengewindeabschnitt 62 ist durch zumindest eine im Wesentlichen senkrecht zur Gewindesteigung verlaufende Ausnehmung 56 unterbrochen. Der Außengewindeabschnitt 52 kann auch zwei oder mehr in Umfangsrichtung verteilt angeordnete Ausnehmungen 56 aufweisen. Bei mehreren Ausnehmungen 56 sind diese bevorzugt symmetrisch verteilt angeordnet. In diese zumindest eine Ausnehmung 66 ist ein elastisch verformbares fadenförmiges Element 57 einlegt. Das fadenförmige Element 57 ragt in radialer Richtung abschnittsweise über den Außengewindeabschnitt 52 hinaus. Bei einem Einschrauben in einen korrespondierenden Innengewindeabschnitt beispielsweise der Hydraulikleitung 39 der Arbeitshydraulik 36 des Mähdreschers 1 ergibt sich die klemmende Wirkung aufgrund der auftretenden Flächenpressung. Hierdurch wird eine zuverlässige axiale Sicherung gegen ein unbeabsichtigtes Lockern oder Losdrehen aufgrund von im Betrieb des Mähdreschers 1 zwangsläufig auftretenden Vibrationen erreicht.

Bevorzugt kann das fadenförmige Element 57 aus einem Kunststoff oder einem Kompositwerkstoff bestehen. Insbesondere kann das fadenförmige Element 57 aus einem Thermoplast hergestellt sein. Eine besonders hohe Belastbarkeit des fadenförmigen Elementes 57 kann durch das Einbetten von Kohle- oder Glasfasern in den Thermoplast erreicht werden.

Für eine verliersichere Anordnung des fadenförmigen Elementes 57 in der Ausnehmung 56 kann diese zumindest eine Hinterschneidung aufweisen. So kann die Ausnehmung 56 beispielsweise einen im Wesentlichen trapezförmigen oder halbkreisförmigen Querschnitt aufweisen. Hierdurch wird das fadenförmige Element 57 in der Ausnehmung 56 fixiert. Zusätzlich kann das fadenförmige Element 57 in die Ausnehmung 56 eingeklebt werden.

Aufgrund der durch die Ausgestaltung des Gewindeabschnitts erreichten Selbstsicherung des Einschraubsensors 50 lassen sich diese auf schnelle und einfache Weise aus und einbauen. Es ist kein zusätzliches Bauteil zur axialen Sicherung notwendig. Ebenfalls kann auf ein Verkleben verzichtet werden, wodurch ein zerstörungsfreier Ausbau ermöglicht wird. Des Weiteren ist eine Wiederverwendbarkeit des Einschraubsensors 50 gegeben.

So ist die Funktionsfähigkeit des selbstsichernden Einschraubsensors 50 auch bei bereits benutzen Einschrauboberflächen respektive Innengewindeabschnitten gegeben. Dies ist insbesondere bei landwirtschaftlichen Arbeitsfahrzeugen wie dem Mähdrescher 1 oder dem Traktor von Bedeutung, da die Oberflächen beziehungsweise Einschraubstellen vieler Arbeitsaggregate, an denen die Einschraubsensoren 50 angeordnet werden, unmittelbar einer Kontamination durch Erntegut, Erde, Staub oder im Fall der Arbeitshydraulik 36 dem Hydrauliköl ausgesetzt sind.

Der zumindest eine Drehzahlsensor der Dreschtrommeldrehzahl-Messeinrichtung 31 als auch der Drehzahlsensor 24 des Reinigungsgebläses ist jeweils als selbstsichernder Einschraubsensor ausführbar. Gleiches gilt die die berührungslos arbeitenden Abstandssensoren sowie den magnetostriktiven Sensor am dem Achstrichtergehäuse 42 der Hinterachse 40 des Traktors. Insbesondere bei den berührungslos arbeitenden Sensoren 46, 47 und 48 ist die Beibehaltung eines konstanten Abstandes von großer Bedeutung. Gleiches gilt für Temperatur- oder Winkelsensoren, deren Befestigung durch Einschrauben in ein Bauteil eines Arbeitsaggregates erfolgt.

**Bezugszeichenliste**

| | | | |
|---|---|---|---|
| 1 | Mähdrescher | 32 | Bearbeitungsfläche |
| 2 | Getreideschneidwerk | 33 | Korntank |
| 3 | Schrägförderer | 34 | Fallstufe |
| 4 | Einzugskette | 35 | Fahrerkabine |
| 5 | Dreschaggregat | 36 | Arbeitshydraulik |
| 6 | Dreschaggregat | 37 | Drucksensor |
| 7 | Wendetrommel | 38 | Temperatursensor |
| 8 | Dreschkorb | 39 | Hydraulikleitung |
| 9 | Hordenschüttler | 40 | Hinterachse |
| 10 | Obersieb | 41 | Hinterachswelle |
| 11 | Untersieb | 42 | Achstrichtergehäuse |
| 12 | Überkehrelevator | 43 | Äußeres Radlager |
| 13 | Kornelevator | 44 | Inneres Radlager |
| 14 | Sensor | 45 | Sensoranordnung |
| 15 | Sensor | 46 | Sensor |
| 16 | Überkehrmesseinrichtung | 47 | Sensor |
| 17 | Verlustmesseinrichtung | 48 | Sensor |
| 18 | Obersiebweiten-Messeinrichtung | | |
| 19 | Verlustsensor | 50 | Einschraubsensor |
| 20 | Mengenmesseinrichtung | 51 | Düse |
| 21 | Dreschkorbweiten-Messeinrichtung | 52 | Außengewindeabschnitt |
| 22 | Schnitthöhen-Messeinrichtung | 53 | Dichtelement |
| 23 | Fahrgeschwindigkeitsmesseinrichtung | 54 | Werkzeugbetätigungsabschnitt |
| 24 | Reinigungsgebläse | 55 | Geräteanschlussstecker |
| 25 | Drehzahlsensor | 56 | Ausnehmung |
| 26 | Untersiebweiten-Messeinrichtung | 57 | Fadenförmiges Element |
| 27 | Vorbereitungsboden | | |
| 28 | Rücklaufboden | | |
| 29 | Steuer- und Monitoreinrichtung | | |
| 30 | Bedien- und Anzeigeeinrichtung | | |
| 31 | Dreschtrommeldrehzahl-Messeinrichtung | | |

## Patentansprüche

1. Landwirtschaftliches Arbeitsfahrzeug (1), mit zumindest einem sensorisch überwachten Arbeitsaggregat (2, 3, 5, 6, 8, 10, 11, 13, 24, 36, 40), wofür zumindest ein Sensor (14, 16, 18, 20, 21, 22, 23, 25, 26, 37, 38, 46, 47, 48) dem zu überwachenden Arbeitsaggregat (2, 3, 5, 6, 8, 10, 11, 13, 24, 36, 40) zugeordnet ist, **dadurch gekennzeichnet, dass** der zumindest eine Sensor (14, 16, 18, 20, 21, 22, 23, 25, 26, 37, 38, 46, 47, 48) als ein Einschraubsensor (50) ausgebildet ist, welcher einen Gewindeabschnitt (52) aufweist, der durch wenigstens eine im Wesentlichen senkrecht zur Gewindesteigung verlaufende Ausnehmung (56) zumindest abschnittsweise unterbrochen ist, in die ein elastisch verformbares fadenförmiges Element (57) eingelegt ist.

2. Landwirtschaftliches Arbeitsfahrzeug (1) nach Anspruch 1, **dadurch gekennzeichnet, dass** das fadenförmige Element (57) aus einem Kunststoff oder einem Kompositwerkstoff besteht.

3. Landwirtschaftliches Arbeitsfahrzeug nach Anspruch 1 oder 2, **dadurch gekennzeichnet, dass** die Ausnehmung eine Hinterschneidung aufweist.

4. Landwirtschaftliches Arbeitsfahrzeug (1) nach einem der Ansprüche 1 bis 3, **dadurch gekennzeichnet, dass** das fadenförmige Element (57) in die Ausnehmung (56) eingeklebt ist.

5. Landwirtschaftliches Arbeitsfahrzeug (1) nach einem der vorangehenden Ansprüche, **dadurch gekennzeichnet, dass** der Einschraubsensor (50) als aktiver oder passiver Sensor ausgebildet ist.

6. Landwirtschaftliches Arbeitsfahrzeug (1) nach einem der vorangehenden Ansprüche, **dadurch gekennzeichnet, dass** der Einschraubsensor (50) als berührungslos arbeitender Sensor (46, 47, 48) ausgebildet ist.

7. Landwirtschaftliches Arbeitsfahrzeug (1) nach einem der vorangehenden Ansprüche, **dadurch gekennzeichnet, dass** der Einschraubsensor (50) als Drucksensor (37) ausgebildet ist.

8. Landwirtschaftliches Arbeitsfahrzeug (1) nach einem der vorangehenden Ansprüche, **dadurch gekennzeichnet, dass** der Einschraubsensor als Temperatursensor (38), Feuchtesensor, Beschleunigungssensor, Drehzahlsensor (25) oder Winkelsensor ausgebildet ist.

9. Landwirtschaftliches Arbeitsfahrzeug (1) nach Anspruch 1 oder 2, **dadurch gekennzeichnet, dass** der Einschraubsensor (50) als optischer Sensor (16) ausgebildet ist.

10. Landwirtschaftliches Arbeitsfahrzeug (1) nach einem der vorangehenden Ansprüche, **dadurch gekennzeichnet, dass** der Einschraubsensor (50) an einem aktiv bewegten Bauteil angeordnet ist.

11. Landwirtschaftliches Arbeitsfahrzeug (1) nach einem der vorangehenden Ansprüche, **dadurch gekennzeichnet, dass** der Einschraubsensor (50) einem passiv schwingenden Bauteil zugeordnet ist.

12. Landwirtschaftliches Arbeitsfahrzeug (1) nach einem der vorangehenden Ansprüche, **dadurch gekennzeichnet, dass** der Einschraubsensor (50) einer Arbeitshydraulik (36) des Arbeitsfahrzeugs (1) zugeordnet ist.
